# EUROPEAN PATENT APPLICATION

(11) **EP 4 303 560 A1**
(43) Date of publication of application: **10.01.2024**
(21) Application number: 22762940.9
(22) Date of filing: 14.02.2022
(51) Int. Cl.: G01N 3/00, G01N 3/08

(54) **BREAKAGE PREDICTION PROGRAM AND BREAKAGE PREDICTION METHOD**

(30) Priority: 03.03.2021 JP 2021033963
(71) Applicant: Kuraray Co., Ltd., Kurashiki-shi, Okayama 710-0801 (JP)
(72) Inventor: YANAGISAWA Kazuma, Tsukuba-shi, Ibaraki 305-0841 (JP)
(74) Representative: Müller-Boré & Partner Patentanwälte PartG mbB
(86) International application number: PCT/JP2022/005541
(87) International publication number: WO 2022/185883

(57) **Abstract**

To provide a destruction prediction program and a destruction prediction method that can accurately predict destruction of a resin molding with a simple method. The destruction prediction program includes a first calculation portion (52) that calculates a maximum value of an equivalent strain that occurs in a cutout bottom of a cutout and an inclination of an equivalent strain in an orthogonal direction (T) orthogonal to a main stress direction (S) in which a main stress of the cutout bottom acts by applying, to a 3D test piece model (110) of a test piece (10), a load at breaking the test piece (10) by a tension test to a plurality of test pieces (10) of the resin molding, the plurality of test pieces including cutouts each having different cutout radius, a threshold set portion (53) that sets a threshold E of destruction progress based on the maximum value of the equivalent strain and the inclination of the equivalent strain calculated by the first calculation portion (52), a second calculation portion (55) that calculates a maximum value of an occurring equivalent strain and an inclination of an equivalent strain by applying a load to the 3D target model (120) of the target of the resin molding for the destruction prediction, and a destruction determination portion (56) that determines whether or not destruction occurs based on the maximum value of the equivalent strain and the inclination of the equivalent strain calculated by the second calculation portion (55), and the threshold (E).

## Description

### TECHNICAL FIELD

This disclosure relates to a destruction prediction program with which a computer determines destruction prediction of a resin molding and a destruction prediction method.

### BACKGROUND ART

A method of predicting destruction of a resin molding is known (see Patent Literature 1, for example).

Patent Literature 1 discloses a configuration that expresses a correlation of a correction factor and a break strain with a function of a prescribed format. The correction factor is obtained by dividing a prediction limit load calculated from a limit stress of a stress measurement resin test piece when applying a load to a stress measurement resin test piece of a predetermined ambient environment without a stress concentration portion and an analysis stress that occurs in a stress concentration portion obtained by analysis when applying a load to a resin molding having a stress concentration portion. The break strain is obtained when a load is applied to a strain measurement resin test piece of a predetermined temperature without a stress concertation portion in a stretching direction. The load is thereby applied to the resin molding having the stress concentration portion, and the stress that occurs in the stress concentration portion is accurately predicted although the stress concentration portion of the resin molding is destroyed when the resin molding destroys.

### CITATION LIST

### Patent Literatures

Patent Literature 1: JP2010-249523A

### SUMMARY

### Technical Problem

A concave portion formed in a resin molding has a property in which a leading end of a cutout stretches when a load is applied in accordance with an increase in curvature. As for a resin material containing a reinformed fiber, a stress value that occurs according to an orientation state of a fiber largely changes even when the same load is applied. For this reason, the configuration described in Patent Literature 1 with a stress as a standard cannot accurately predict the destruction of the resin molding.

It is therefore an object of the present disclosure to provide a destruction prediction program and a destruction prediction method that can accurately predict destruction of a resin molding with a simple method.

### Solution to Problem

In order to achieve the above objection, a destruction prediction program of the present disclosure is a destruction prediction program with which a computer determines destruction predication of a resin molding, the program includes a first calculation portion that calculates a maximum value of an equivalent strain that occurs in a cutout bottom of a cutout and an inclination of an equivalent strain in an orthogonal direction orthogonal to a main stress direction in which a main stress of the cutout bottom acts by applying, to a 3D test piece model of a test piece, a load at breaking the test piece by a tension test to a plurality of test pieces of the resin molding, the plurality of test pieces including cutouts each having different cutout radius, a threshold set portion that sets a threshold of destruction progress based on the maximum value of the equivalent strain and the inclination of the equivalent strain calculated by the first calculation portion, a second calculation portion that calculates a maximum value of an occurring equivalent strain and an inclination of an equivalent strain by applying a load to the 3D target model of the target of the resin molding for the destruction prediction, and a destruction determination portion that determines whether or not destruction occurs based on the maximum value of the equivalent strain and the inclination of the equivalent strain calculated by the second calculation portion, and the threshold.

In order to achieve the above objection, a destruction prediction method of the present disclosure is a destruction prediction method of a resin molding, the method includes a break load measurement step of measuring a load at breaking a test piece by executing a tension test to a plurality of test pieces of the resin molding, the plurality of test pieces including cutouts each having different cutout radius, a first calculation step of calculating a maximum value of an equivalent strain that occurs in a cutout bottom of the cutout and an inclination of an equivalent strain in an orthogonal direction orthogonal to a main stress direction in which a main stress of the cutout bottom acts by applying, to a 3D test piece model of the test piece with a computer, a load at breaking the test piece measured by the break load measurement step, a threshold set step of setting a threshold of destruction progress based on the maximum value of the equivalent strain and the inclination of the equivalent strain calculated by the first calculation step, a second calculation step of calculating a maximum value of an equivalent strain and an inclination of an equivalent strain by applying a load to the 3D target model of the target of the resin molding for destruction prediction with a computer, and a destruction determination step of determining whether or not destruction occurs based on the maximum value of the equivalent strain and the inclination of the equivalent strain calculated by the second calculation step, and the threshold.

### Advantageous Effects

The above-described destruction prediction program and destruction prediction method of the present disclosure can accurately predict the destruction of the resin molding with a simple method.

### BRIEF DESCRIPTION OF DRAWINGS

FIG. 1 is a block diagram illustrating a configuration of a destruction prediction system that executes a destruction prediction program of a first embodiment.
FIG. 2 is a perspective view describing a tension test of a test piece of the first embodiment.
FIG. 3 is a view describing a method of manufacturing the test piece of the first embodiment.
FIG. 4 is a plan view illustrating the test pieces of the first embodiment.
FIG. 5 is a graph showing results of the tension tests of the first embodiment.
FIG. 6 is a plan view illustrating a 3D test piece model of the first embodiment.
FIG. 7 is an analysis diagram illustrating the 3D test piece model of the first embodiment to which a load is applied.
FIG. 8 is a graph showing a relationship between a position from a surface and a strain of the 3D test piece model of the first embodiment.
FIG. 9 is a graph describing a threshold of the first embodiment.
FIG. 10 is a perspective view illustrating a 3D target model of the first embodiment.
FIG. 11A is an analysis diagram illustrating the 3D target model of the first embodiment to which a load is applied, and also describing the maximum value of an equivalent strain.
FIG. 11B is an analysis diagram illustrating the 3D target model of the first embodiment to which a load is applied, and also describing an inclination of the equivalent strain.
FIG. 12 is a graph illustrating a relationship between a position from a surface and a strain of the 3D target model of the first embodiment.
FIG. 13 is a graph describing a destruction determination portion of the first embodiment.
FIG. 14 is a flowchart illustrating a flow of a process by a control portion of the first embodiment.
FIG. 15 is a flowchart illustrating a destruction prediction method of a resin molding of the first embodiment.

### DESCRIPTION OF EMBODIMENTS

Hereinafter, an embodiment that realizes a destruction prediction program and a destruction prediction method according to the present disclosure will be described based on a first embodiment.

### First Embodiment

A destruction prediction program and a destruction prediction method in the first embodiment determine destruction prediction of a resin molding with a computer.

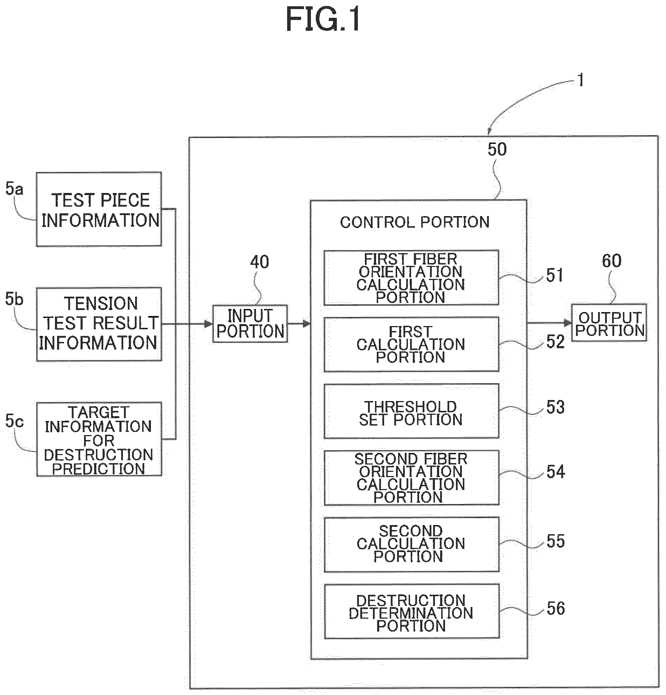

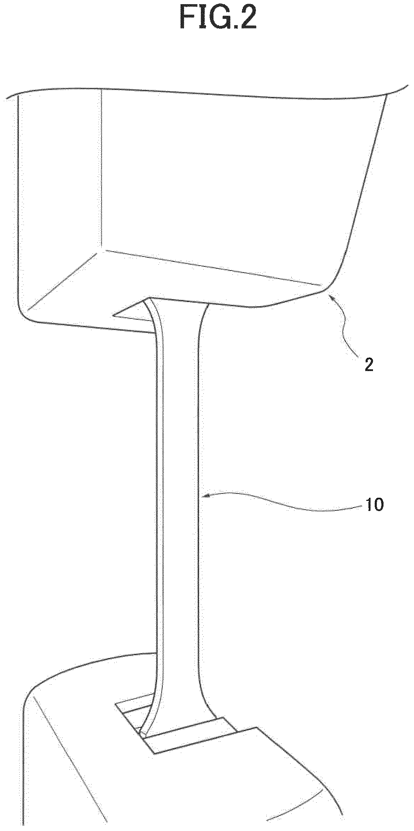

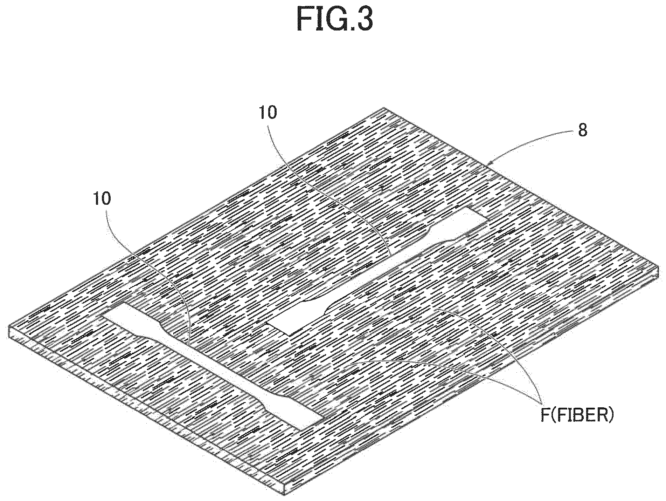

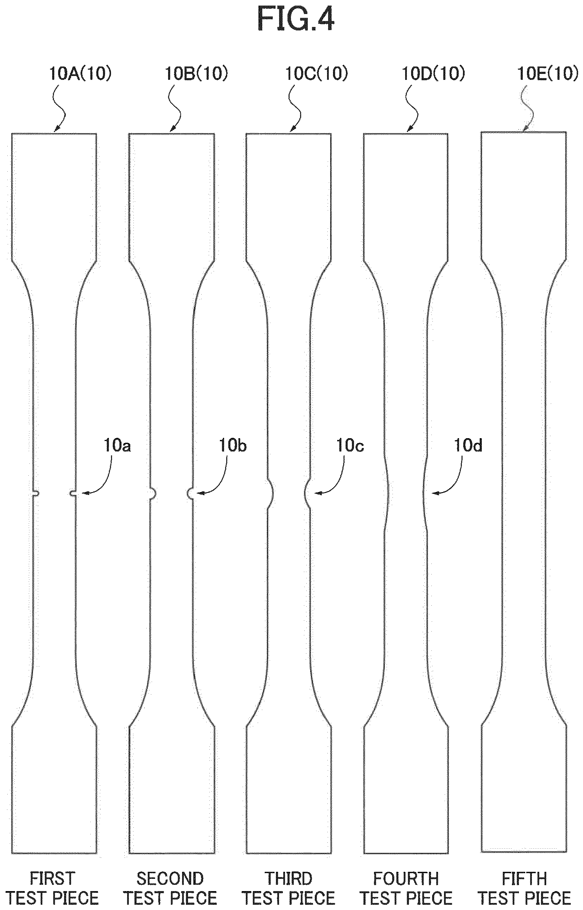

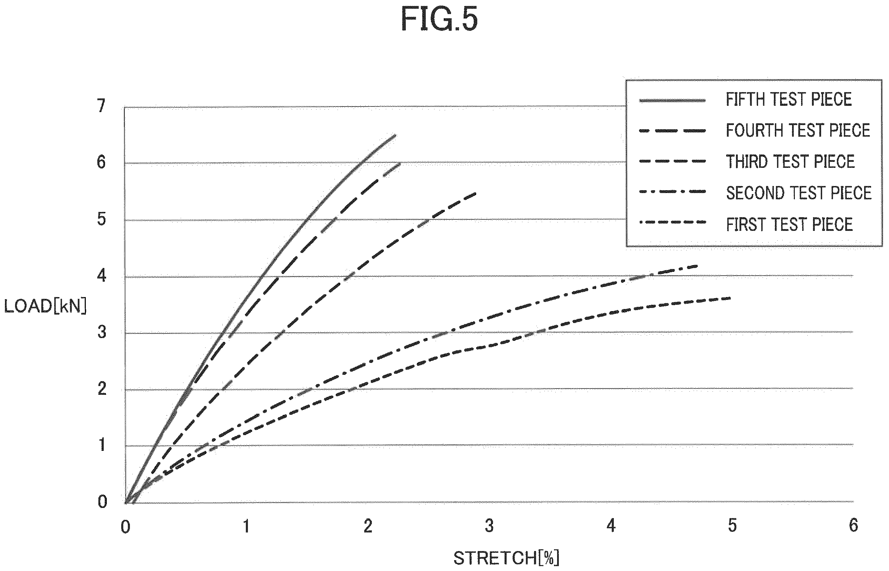

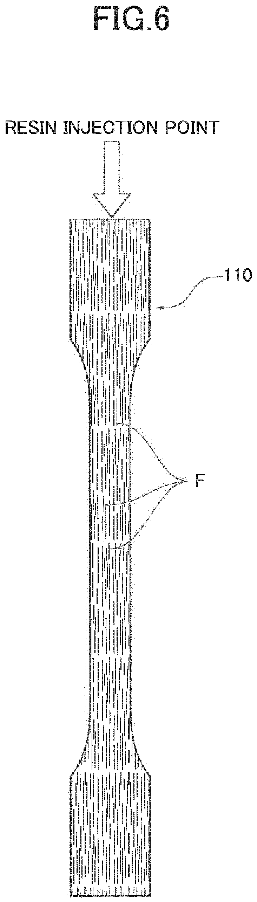

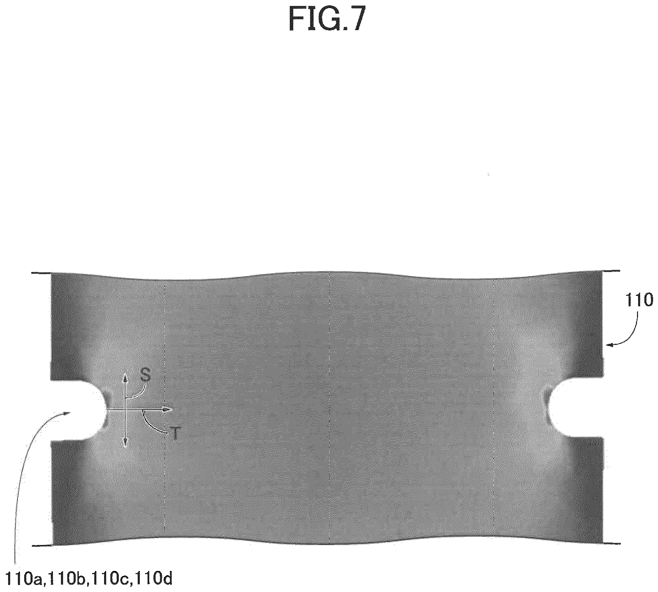

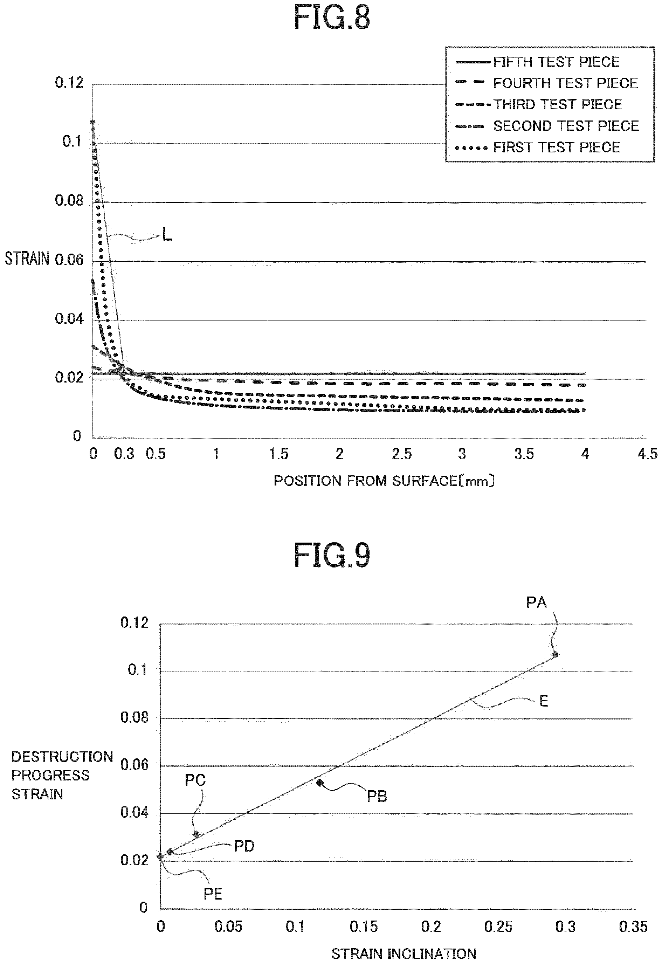

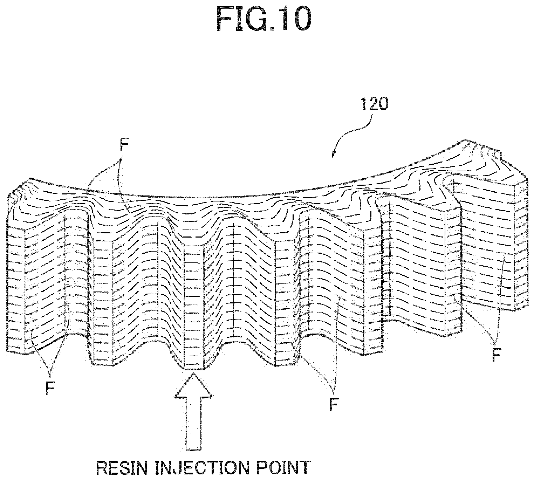

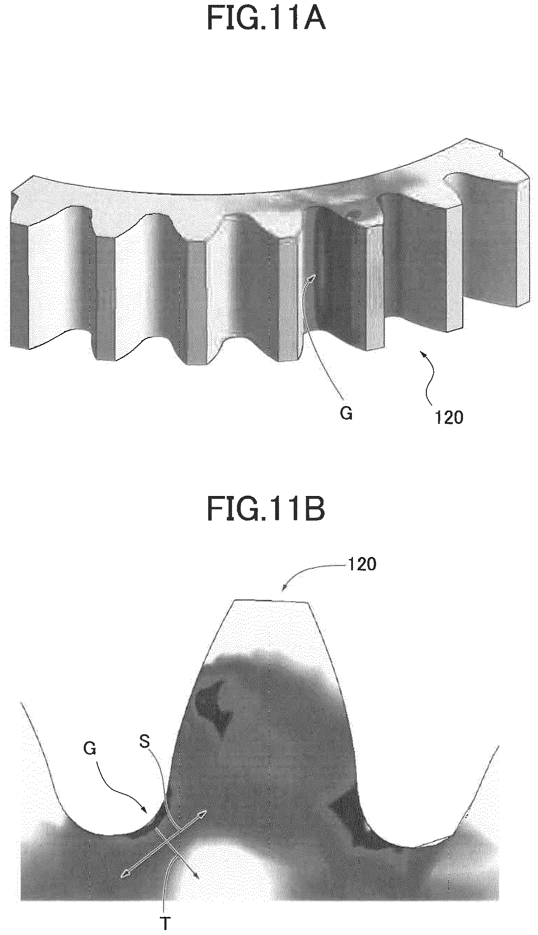

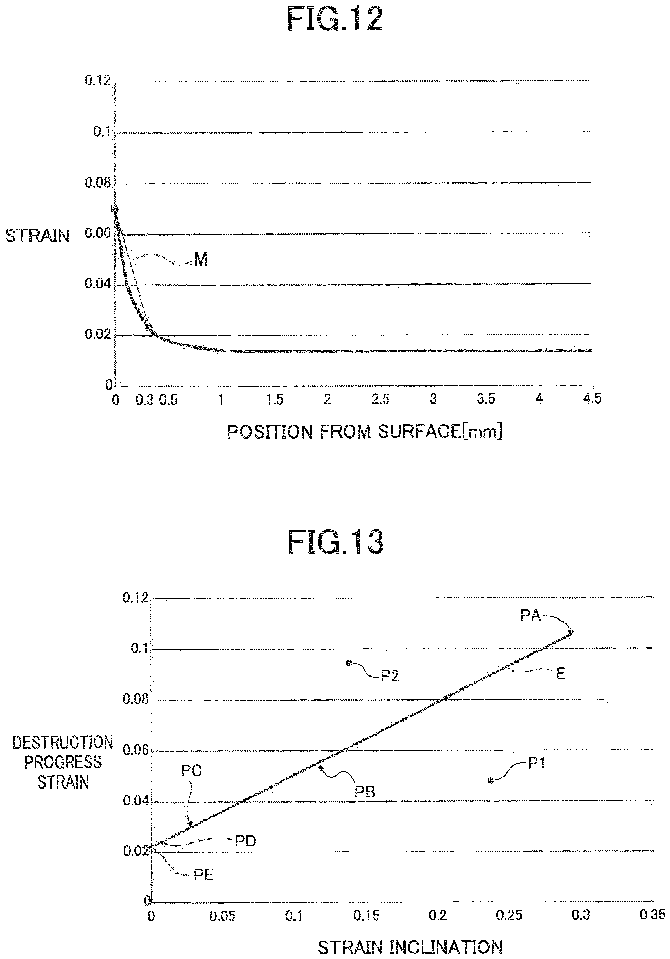

A configuration of a destruction prediction system will be described. FIG. 1 is a block diagram illustrating a destruction prediction system that executes a destruction prediction program of the first embodiment. FIG. 2 is a perspective view describing a tension test of a test piece of the first embodiment. FIG. 3 is a view describing a method of manufacturing the test piece of the first embodiment. FIG. 4 is a plan view illustrating the test piece of the first embodiment. FIG. 5 is a graph showing the results of the tension tests of the first embodiment. FIG. 6 is a plan view illustrating a 3D test piece model of the first embodiment. FIG. 7 is an analysis diagram illustrating a 3D test model of the first embodiment to which a load is applied. FIG. 8 is a graph illustrating a relationship between a position from a surface and a strain of the 3D test piece model of the first embodiment. FIG. 9 is a graph describing a threshold of the first embodiment. FIG. 10 is a perspective view illustrating the 3D target model of the first embodiment. FIGS. 11A, 11B are analysis diagrams each illustrating the 3D target model of the first embodiment to which a load is applied. FIG. 11A is a diagram describing the maximum value of an equivalent strain. FIG. 11B is a diagram describing an inclination of the equivalent strain. FIG. 12 is a graph illustrating a relationship between the position from the surface and the strain of the 3D target model of the first embodiment. FIG. 13 is a graph describing a destruction determination portion of the first embodiment. Hereinafter, the configuration of the destruction prediction system that executes the destruction prediction program of the first embodiment will be described.

As illustrated in FIG. 1, the destruction prediction system 1 that executes the destruction prediction program is a computer (for example, personal computer). In the destruction prediction system 1, information is input to a control portion 50 from an input portion 40, and the information processed in the control portion 50 is output to an output portion 60.

The input portion 40 will be described. The input portion 40 inputs information such as test piece information 5a, tension test result information 5b, and target information 5c for destruction prediction to the control portion 50.

The test piece information will be described. The test piece information 5a is information of a test piece 10 that is a resin molding. As illustrated in FIG. 2, the test piece 10 is for a test with a tension test machine 2. The test piece 10 is formed by injection molding, for example.

The test piece 10 may be formed by cutting a plate formed by injection molding from various directions. For example, as illustrated in FIG. 3, the test piece 10 may be a test piece 10 extending in a longitudinal direction and a test piece 10 extending in a short direction orthogonal to the longitudinal direction, which are formed by pressing the plate 8 formed by injection molding. The test pieces 10 each having a different direction of a fiber F can be thereby manufactured.

The test piece information 5a includes resin information of the test piece 10, shape information of the test piece 10, and molding condition information of the test piece 10. The shape information of the test piece 10 includes size information of a cutout of the test piece 10. The molding condition information of the test piece 10 includes information of a resin injection point (gate) at which resin is injected into an injection molding mold when the test piece 10 is formed by injection molding, for example.

In the first embodiment, the test piece 10 is a fiber composite resin molding. The fiber composite resin molding may be formed by crystalline thermoplastic resin (PA, PEEK, PPS, POM, PBT, PE) containing reinforced fiber (glass and carbon). That is, the resin information of the test piece 10 includes information of a resin type of the test piece 10.

As illustrated in FIG. 4, in the first embodiment, as the test piece 10, a first test piece 10A, a second test piece 10B, a third test piece 10C, a fourth test piece 10D, and a fifth test piece 10E are used.

The first test piece 10A includes a cutout 10a. The cutout 10a is formed into an R shape in a front view and has a 0.5 mm radius (cutout radius). The bottom of the cutout 10a constitutes a cutout bottom.

The second test piece 10B includes a cutout 10b. The cutout 10b has an R shape in a front view and has a 1.0 mm radius (cutout radius). The bottom of the cutout 10b constitutes a cutout bottom.

The third test piece 10C includes a cutout 10c. The cutout 10c has an R shape in a front view and has a 5.0 mm radius (cutout radius). The bottom of the cutout 10c constitutes a cutout bottom.

The fourth test piece 10D includes a cutout 10d. The cutout 10d has an R shape in a front view and has a 50.0 mm radius (cutout radius). The bottom of the cutout 10d constitutes a cutout bottom.

The fifth test piece 10E includes no cutout. In other words, the fifth test piece 10E includes a cutout having an endless radius (cutout radius).

For example, as illustrated in FIG. 6, the shape information of the test piece 10 may be a 3D test piece model 110 of the test piece 10 manufactured by a 3DCAD.

In the first embodiment, the test piece 10 is formed by injection molding. The molding condition information of the test piece 10 includes information required for calculating fiber orientation by filling analysis that reproduces an injection molding step. For example, the molding condition information of the test piece 10 includes the information of the resin injection point (gate) at which resin is injected into an injection molding mold.

The tension test result information will be described. The tension test result information 5b includes information of the results of the tension tests for the first test piece 10A, the second test piece 10B, the third test piece 10C, the fourth test piece 10D, and the fifth test piece 10E with the tension test machine 2.

More specifically, as illustrated in FIG. 5, the tension test result information 5b includes information of a relationship between stretch and a load and information of a load at breaking, which are obtained by executing the tension tests to the first test piece 10A, the second test piece 10B, the third test piece 10C, the fourth test piece 10D, and the fifth test piece 10E. That is, the tension test result information 5b includes the load at breaking the test piece 10 by the tension tests to a plurality of test pieces 10 including cutouts each having different radius.

The target information for destruction prediction will be described. The target information 5c for the destruction prediction includes the resin information, the shape information and the molding condition information of the target component of the resin molding for the destruction prediction.

The resin information of the target component includes the information of the resin type of the target component. It is preferable of the resin type of the target component to be the same resin as the test piece 10. For example, as illustrated in FIG. 10, the shape information of the target component may be a 3D target model 120 manufactured by a 3DCAD. When the target component is formed by injection molding, for example, the molding condition information of the target component includes the information of the resin injection point (gate) at which resin is injected into the injection molding mold.

The control portion will be described. As illustrated in FIG. 1, the control portion 50 includes a first fiber orientation calculation portion 51, a first calculation portion 52, a threshold set portion 53, a second fiber orientation calculation portion 54, a second calculation portion 55, and a destruction determination portion 56.

The first fiber orientation calculation portion will be described. The first fiber orientation calculation portion 51 calculates the fiber orientation of the 3D test piece model 110. The first fiber orientation calculation portion 51 calculates the orientation of the fiber F by filling analysis that reproduces an injection molding step. The first fiber orientation calculation portion 51 maps the fiber orientation calculated by the filling analysis on a structure analysis model, and allocates the information of the fiber orientation to each element of the structure analysis model as illustrated in FIG. 6.

The first calculation portion will be described. As illustrated in FIG. 7, the first calculation portion 52 calculates the maximum value of the equivalent strain that occurs in the cutout bottom of the cutout (11 0a, 110b, 110c, 11 0d) and the inclination of the equivalent strain in the orthogonal direction T orthogonal to the main stress direction S in which the main stress of the cutout bottom acts by applying a load at breaking the test piece 10 by the tension test to the 3D test piece model 110. The first calculation portion 52 calculates the maximum value of the equivalent strain that occurs in the cutout bottom and the inclination of the equivalent strain in the orthogonal direction T to the 3D test piece model 110 having the information of the fiber orientation calculated by the fiber orientation calculation portion (first fiber orientation calculation portion 51).

The main stress direction S when applying a load to the 3D test piece model 110 indicates a direction stretched by the tension test. The orthogonal direction T when applying a load to the 3D test piece model 110 is a direction orthogonal to the main stress direction S, and indicates the width direction of the 3D test piece model 110.

As illustrated in FIG. 8, the maximum value of the equivalent strain that occurs in the cutout bottom of the cutout 10a of the first test piece 10A is about 0.11. The maximum value of the equivalent strain that occurs in the cutout bottom of the cutout 10b of the second test piece 10B is about 0.05. The maximum value of the equivalent strain that occurs in the cutout bottom of the cutout 10c of the third test piece 10C is about 0.03. The maximum value of the equivalent strain that occurs in the cutout bottom of the cutout 10d of the fourth test piece 10D is about 0.025. The maximum value of the equivalent strain that occurs in the side of the fifth test piece 10E is about 0.023.

The inclination of the equivalent strain in the orthogonal direction T is calculated based on the equivalent strain of the surface layer of the 3D test piece model 110. The inclination of the equivalent strain in the orthogonal direction T may be an inclination of a line connecting the equivalent strain of the surface of the cutout bottom and the equivalent strain of the position of 0.3 mm in the orthogonal direction T from the surface of the cutout bottom.

As illustrated in FIG. 8, as for the first test piece 10A, the inclination is the inclination of the line L connecting the equivalent strain of the surface of the cutout bottom and the equivalent strain of the position of 0.3 mm in the orthogonal direction T from the front surface of the cutout bottom.

The inclination of the equivalent strain in the orthogonal direction T may be calculated based on the equivalent strain of the surface layer from a point at which the graph of the first test piece 10A having the maximum inclination intersects with the graph of the fifth test piece 10E having the minimum inclination.

As described above, the first calculation portion 52 calculates the maximum value of the equivalent strain that occurs in the cutout bottom of the cutout and the inclination of the equivalent strain in the orthogonal direction T relative to the first test piece 10A, the second test piece 10B, the third test piece 10C, the fourth test piece 10D, and the fifth test piece 10E.

The threshold set portion will be described. The threshold set portion 53 sets a threshold E of destruction progress based on the inclination of the equivalent strain and the maximum value of the equivalent strain calculated by the first calculation portion 52.

More specifically, as illustrated in FIG. 9, the threshold set portion 53 sets a first threshold point PA based on the maximum value (0.11) of the equivalent strain that is the destruction progress strain of the first test piece 10A and the inclination of the equivalent strain of the first test piece 10A.

The threshold set portion 53 sets a second threshold point PB based on the maximum value (0.05) of the equivalent strain that is the destruction progress strain of the second test piece 10B and the inclination of the equivalent strain of the second test piece 10B.

The threshold set portion 53 sets a third threshold point PC based on the maximum value (0.03) of the equivalent strain that is the destruction progress strain of the third test piece 10C and the inclination of the equivalent strain of the third test piece 10C.

The threshold set portion 53 sets a fourth threshold point PD based on the maximum value (0.025) of the equivalent strain that is the destruction progress strain of the fourth test piece 10D and the inclination of the equivalent strain of the fourth test piece 10D.

The threshold set portion 53 sets a fifth threshold point PE based on the maximum value (0.023) of the equivalent strain that is the destruction progress strain of the fifth test piece 10E and the inclination of the equivalent strain of the fifth test piece 10E.

The threshold set portion 53 sets an approximation straight line passing through the first threshold point PA, the second threshold point PB, the third threshold point PC, the fourth threshold point PD, and the fifth threshold point PE based on these points. This approximation straight line constitutes a threshold E.

The second fiber orientation calculation portion will be described. The second fiber orientation calculation portion 54 calculates the fiber orientation of the 3D target model 120. The second fiber orientation calculation portion 54 calculates the orientation of the fiber F by the filling analysis that reproduces the injection molding step, for example. The second fiber orientation calculation portion 54 maps the fiber orientation calculated by the filling analysis on the structure analysis model, and allocates the information of the fiber orientation to each element of the structure analysis model as illustrated in FIG. 10.

The second calculation portion will be described. The second calculation portion 55 calculates the maximum value of the occurring equivalent strain and the inclination of the occurring equivalent strain by applying a load to the 3D target model 120 of the target for the destruction prediction. The second calculation portion 55 calculates an elastic rate of each element from the relationship between the load and the fiber orientation calculated by the second fiber orientation calculation portion 54, and executes the entire structure calculation based on the elastic rate.

More specifically, as illustrated in FIG. 11A, the second calculation portion 55 calculates the maximum value of the equivalent strain by applying a load to the 3D target model 120 and specifying a position G that is a convex portion where the maximum strain occurs by the stress analysis. As illustrated in FIG. 11B, the second calculation portion 55 calculates the inclination of the equivalent strain in the orthogonal direction T orthogonal to the main stress direction S in which the main stress acts.

The inclination of the equivalent strain in the orthogonal direction T when applying a load to the 3D target model 120 is calculated based on the equivalent strain of the surface layer of the 3D target model 120. The inclination of the equivalent strain in the orthogonal direction T when applying a load to the 3D target model 120 may be the inclination of a line M connecting the equivalent strain of the surface of the position G where the maximum strain occurs and the equivalent strain of the position of 0.3 mm in the orthogonal direction T from the surface of the position G where the maximum strain occurs as illustrated in FIG. 12, for example.

The destruction determination portion will be described. The destruction determination portion 56 determines whether or not the destruction occurs based on the inclination of the equivalent strain and the maximum value of the equivalent strain calculated by the second calculation portion 55, and the threshold E.

More specifically, the destruction determination portion 56 determines no destruction when a plot point P1 calculated based on the inclination of the equivalent strain and the maximum value of the equivalent strain calculated by the second calculation part 55 is under the threshold E as illustrated in FIG. 13. The destruction determination portion 56 determines destruction when a plot point P2 calculated based on the inclination of the equivalent strain and the maximum value of the equivalent strain calculated by the second calculation portion 55 is above the threshold E.

The output portion will be described. As illustrated in FIG. 1, the output portion 60 receives the information processed by the control portion 50. The output portion 60 may be a display monitor. The output portion 60 receives the information determined by the destruction determination portion 56.

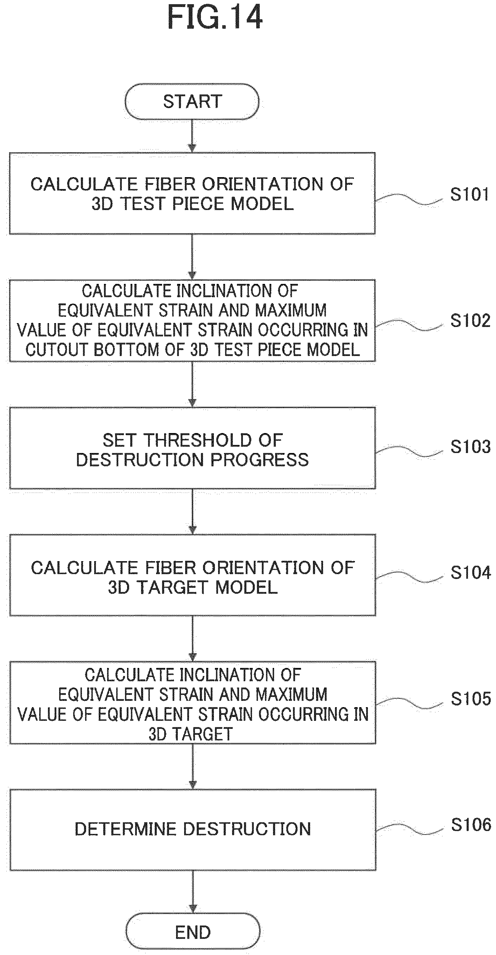

The flow of the process by the control portion will be described. FIG. 14 is a flowchart illustrating the flow of the process by the control portion 50 of the first embodiment. Hereinafter, the flow of the process by the control portion 50 of the first embodiment will be described.

As illustrated in FIG. 14, the first fiber orientation calculation portion 51 calculates the fiber orientation of the 3D test piece model 110 (Step S101).

Next, the first calculation portion 52 calculates the maximum value of the equivalent strain that occurs in the cutout bottom of the cutout and the inclination of the equivalent strain in the orthogonal direction T orthogonal to the main stress direction S in which the main stress of the cutout bottom acts by applying a load at breaking the test piece 10 by the tension test to the 3D test piece model 110 (Step S102).

Next, the threshold set portion 53 sets the threshold E of the destruction progress based on the maximum value of the equivalent strain and the inclination of the equivalent strain calculated by the first calculation portion 52 (Step S103).

Next, the second fiber orientation calculation portion 54 calculates the fiber orientation of the 3D target model 120 (Step S104).

Next, the second calculation portion 55 calculates the maximum value of the occurring equivalent strain and the inclination of the equivalent strain by applying a load to the 3D target model 120 of the target for destruction prediction (Step S105).

Next, the destruction determination portion 56 determines whether or not the destruction occurs based on the maximum value of the equivalent strain and the inclination of the equivalent strain calculated by the second calculation portion 55, and the threshold E (Step S106), and ends the process.

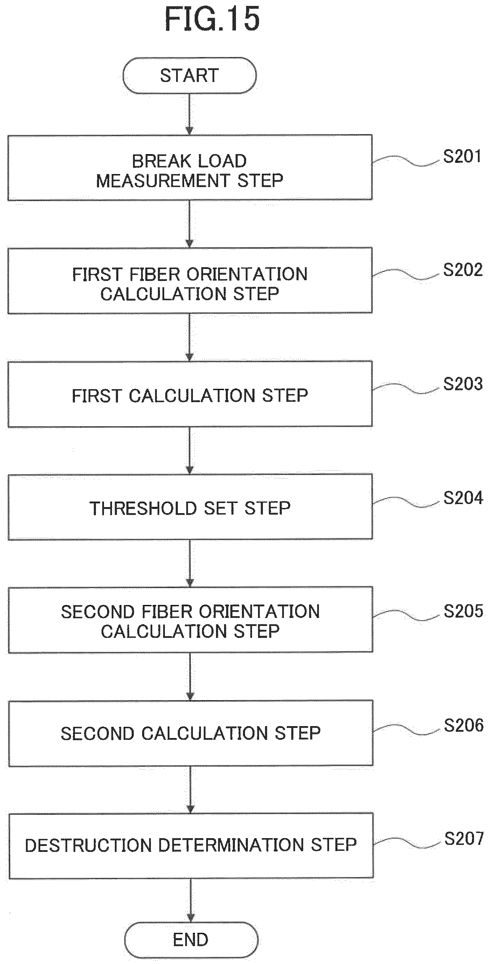

The destruction prediction method will be described. FIG. 15 is a flowchart illustrating the destruction prediction method of the resin molding of the first embodiment. Hereinafter, the flow of the destruction prediction method of the resin molding of the first embodiment will be described.

The break load measurement step will be described. As illustrated in FIG. 15, in the break load measurement step, the load at breaking the test piece 10 is measured by performing the tension test to a plurality of test pieces 10 including the cutouts each having a different cutout radius (Step S201).

The first fiber orientation calculation step will be described. In the first fiber orientation calculation step, the computer calculates the fiber orientation of the 3D test piece model 110 of the test piece 10 (Step S202).

The first calculation step will be described. In the first calculation step, the computer calculates the maximum value of the equivalent strain occurring in the cutout bottom of the cutout and the inclination of the equivalent strain in the orthogonal direction T orthogonal to the main stress direction S in which the main stress of the cutout bottom acts by applying a load at breaking the test piece 10 measured in the break load measurement step to the 3D test piece model 110 having the information of the fiber orientation calculated by the first fiber orientation calculation step (Step S203).

The threshold set step will be described. In the threshold set step, the computer sets the threshold E of the destruction progress based on the maximum value of the equivalent strain and the inclination of the equivalent strain calculated by the first calculation step (Step S204).

The second fiber orientation calculation step will be described. In the second fiber orientation calculation step, the computer calculates the fiber orientation of the 3D target model 120 of the target for the destruction prediction (Step S205).

The second calculation step will be described. In the second calculation step, the computer calculates the maximum value of the occurring equivalent strain and the inclination of the equivalent strain by applying a load to the 3D target model 120 (Step S206).

The destruction determination step will be described. In the destruction determination step, the computer determines whether or not the destruction occurs based on the maximum value of the equivalent strain and the inclination of the equivalent strain calculated by the second calculation step (Step S207).

Hereinafter, the operations of the destruction prediction program and the destruction prediction method of the first embodiment will be described.

The destruction prediction program of the first embodiment is a destruction prediction program with which a computer determines the destruction prediction of the resin molding. The destruction predication program of the first embodiment includes the first calculation portion 52 that calculates the maximum value of the equivalent strain that occurs in the cutout bottom of the cutout and the inclination of the equivalent strain in the orthogonal direction T orthogonal to the main stress direction S in which the main stress of the cutout bottom acts by applying, to the 3D test piece model 110 of the test piece 10, a load at breaking the test piece 10 by the tension test to a plurality of test pieces 10 of resin moldings including the cutouts each having different cutout radius, the threshold set portion 53 that sets the threshold E of the destruction progress based on the maximum value of the equivalent strain and the inclination of the equivalent strain calculated by the first calculation portion 52, the second calculation portion 55 that calculates the maximum value of the occurring equivalent strain and the inclination of the equivalent strain by applying a load to the 3D target model 120 of the target of the resin molding for the destruction prediction, and the destruction determination portion 56 that determines whether or not the destruction occurs based on the maximum value of the equivalent strain and the inclination of the equivalent strain calculated by the second calculation portion 55, and the threshold E (FIG.1).

The cutout formed in the resin molding has a property in which the leading end of the cutout stretches when applying a load in accordance with an increase in curvature.

In the first embodiment, the test results to a plurality of test pieces 10 including the cutouts each having a different cutout radius can be considered. Accordingly, the destruction prediction of the target component of the resin molding for the destruction prediction can be performed while considering the property that the resin molding stretches based on a difference in cutout radius. As a result, the destruction prediction of the target component of the resin molding for destruction prediction can be accurately performed with a simple method.

In the destruction prediction program of the first embodiment, the resin molding is a fiber composite resin molding. The destruction prediction program includes the fiber orientation calculation portion (first fiber orientation calculation portion 51) that calculates the fiber orientation of the 3D test piece model 110. The first calculation portion 52 calculates the maximum value of the equivalent strain that occurs in the cutout bottom and the inclination of the equivalent strain in the orthogonal direction T to the 3D test piece model 110 having the information of the fiber orientation calculated by the fiber orientation calculation portion (first fiber orientation calculation portion 51) (FIG. 1).

The value of the strain of the fiber composite resin molding largely changes due to the influence of the fiber orientation. When the fiber is arranged in the longitudinal direction, the size of the strain when stretching in the longitudinal direction is restricted by the rigidity of the fiber. When the fiber is arranged in the longitudinal direction, the strain of the resin molding hardly occurs in the longitudinal direction, and easily occurs in the lateral direction. As a result, when the fiber orientation is not considered, the destruction prediction of the fiber composite resin molding cannot be accurately performed.

In the first embodiment, the destruction prediction of the target component of the resin molding for the destruction prediction can be performed while considering the fiber orientation. Accordingly, the destruction prediction of the target component of the resin molding for the destruction prediction can be accurately performed.

In the destruction prediction program of the first embodiment, the first calculation portion 52 calculates the inclination of the equivalent strain based on the equivalent strain of the surface layer of the 3D test piece model 110 (FIG. 8).

The inclination of the equivalent strain of the surface layer having large change in the strain of the resin molding can be thereby used. Accordingly, the destruction prediction of the target component of the resin molding for the destruction prediction can be accurately performed while sufficiently considering the property in which the resin molding stretches based on a difference in cutout radius.

In the destruction prediction program of the first embodiment, the test pieces 10 manufactured by cutting the plate 8 in a plurality of directions are used (FIG. 3).

The destruction can be thereby determined based on the test piece 10 in accordance with the fiber orientation of the 3D target model 120. Accordingly, the destruction prediction of the target component of the resin molding for the destruction prediction can be accurately performed.

The destruction prediction method of the first embodiment is a destruction prediction method of a resin molding. The destruction prediction method includes the break load measurement step of measuring a load at breaking the test piece 10 by executing the tension test to a plurality of test pieces 10 of the resin moldings including the cutouts each having different cutout radius, the first calculation step of calculating the maximum value of the equivalent strain that occurs in the cutout bottom of the cutout and the inclination of the equivalent strain in the orthogonal direction T orthogonal to the main stress direction S in which the main stress of the cutout bottom acts by applying a load at breaking the test piece 10 measured by the break load measurement step with a computer to the 3D test piece model 110 of the test piece 10, the threshold set step of setting the threshold E of the destruction progress based on the maximum value of the equivalent strain and the inclination of the equivalent strain calculated by the first calculation step, the second calculation step of calculating the maximum value of the occurring equivalent strain and the inclination of the equivalent strain by applying a load with the computer to the 3D target model 120 of the target of the resin molding for the destruction prediction, and the destruction determination step of determining whether or not the destruction occurs based on the maximum value of the equivalent strain and the inclination of the equivalent strain calculated by the second calculation step, and the threshold E (FIG. 15).

The concave portion formed in the resin molding has the property that the leading end of the cutout stretches when applying a load in accordance with an increase in curvature.

In the first embodiment, the test results to a plurality of test pieces 10 including the cutouts each having a different cutout radius can be considered. Accordingly, the destruction prediction of the target component of the resin molding for the destruction prediction can be performed while considering the property that the resin molding stretches based on a difference in cutout radius. As a result, the destruction prediction of the target component of the resin molding for the destruction prediction can be accurately performed with a simple method.

In the destruction prediction method of the first embodiment, the resin molding is the fiber composite resin molding. The destruction prediction method includes the fiber orientation calculation step of calculating the fiber orientation of the 3D test piece model 110. The first calculation step calculates the maximum value of the equivalent strain that occurs in the cutout bottom and the inclination of the equivalent strain in the orthogonal direction T to the 3D test piece model 110 having the information of the fiber orientation calculated by the fiber orientation calculation step (FIG. 15).

The value of the strain of the fiber composite resin molding largely changes due to the influence of the fiber orientation. When the fiber is arranged in the longitudinal direction, the size of the strain when stretching in the longitudinal direction is restricted by the rigidity of the fiber. For this reason, when the fiber is arranged in the longitudinal direction, the strain of the resin molding hardly occurs in the longitudinal direction and easily occurs in the lateral direction. As a result, when the fiber orientation is not considered, the destruction prediction of the fiber composite resin molding cannot be accurately performed.

In the first embodiment, the destruction prediction of the target component of the resin molding for the destruction prediction can be performed while considering the fiber orientation. Accordingly, the destruction prediction of the target component of the resin molding for the destruction prediction can be accurately performed.

As described above, the destruction prediction program and the destruction prediction method of the present disclosure are described based on the first embodiment. However, the detailed structures are not limited to the embodiment. For example, any change and addition are allowed as long as they do not depart from the gist of the present disclosure according to each claim.

In the first embodiment, the example that forms the test piece 10 and the target component by injection molding is shown. However, the molding method of the test piece and the target component is not limited to the embodiment. These may be formed by blow molding, for example.

In the first embodiment, the example in which the test piece 10 and the target component are the fiber composite resin moldings is shown. However, the test piece 10 and the target component may be a resin molding.

In the first embodiment, the example in which the first fiber orientation calculation portion 51 and the second fiber orientation calculation portion 54 are provided is shown. However, the first fiber orientation calculation portion 51 and the second fiber orientation calculation portion 54 may not be provided.

In the first embodiment, the example in which the first fiber orientation calculation step and the second fiber orientation calculation step are provided is shown. However, the first fiber orientation calculation step and the second fiber orientation calculation step may not be provided.

### CROSS-REFERENCE TO RELATED APPLICATION

The present application is based on and claims priority to Japanese Patent Application No. 2021-033963, filed on March 3, 2021, the disclosure of which is hereby incorporated by reference in its entirety.

## Claims

1. A destruction prediction program with which a computer determines destruction prediction of a resin molding, the program comprising:
a first calculation portion that calculates a maximum value of an equivalent strain that occurs in a cutout bottom of a cutout and an inclination of an equivalent strain in an orthogonal direction orthogonal to a main stress direction in which a main stress of the cutout bottom acts by applying, to a 3D test piece model of a test piece, a load at breaking the test piece by a tension test to a plurality of test pieces of the resin molding, the plurality of test pieces including cutouts each having different cutout radius;
a threshold set portion that sets a threshold of destruction progress based on the maximum value of the equivalent strain and the inclination of the equivalent strain calculated by the first calculation portion;
a second calculation portion that calculates a maximum value of an occurring equivalent strain and an inclination of an equivalent strain by applying a load to the 3D target model of the target of the resin molding for the destruction prediction; and
a destruction determination portion that determines whether or not destruction occurs based on the maximum value of the equivalent strain and the inclination of the equivalent strain calculated by the second calculation portion, and the threshold.

2. The destruction prediction program according to claim 1, wherein
the resin molding is a fiber composite resin molding,
the program comprises a fiber orientation calculation portion that calculates fiber orientation of the 3D test piece model, and
the first calculation portion calculates the maximum value of the equivalent strain that occurs in the cutout bottom and the inclination of the equivalent strain in the orthogonal direction to the 3D test piece model having information of the fiber orientation calculated by the fiber orientation calculation portion.

3. The destruction prediction program according to claim 1 or 2, wherein the first calculation portion calculates the inclination of the equivalent strain based on an equivalent strain of a surface layer of the 3D test piece model.

4. The destruction prediction program according to any one of claims 1 to 3, wherein the test piece that is manufactured by cutting a plate into a plurality of directions is used.

5. A destruction prediction method of a resin molding, the method comprising:
a break load measurement step of measuring a load at breaking a test piece by executing a tension test to a plurality of test pieces of the resin molding, the plurality of test pieces including cutouts each having a different cutout radius;
a first calculation step of calculating a maximum value of an equivalent strain that occurs in a cutout bottom of the cutout and an inclination of an equivalent strain in an orthogonal direction orthogonal to a main stress direction in which a main stress of the cutout bottom acts by applying, to a 3D test piece model of the test piece with a computer, a load at breaking the test piece measured by the break load measurement step;
a threshold set step of setting a threshold of destruction progress based on the maximum value of the equivalent strain and the inclination of the equivalent strain calculated by the first calculation step;
a second calculation step of calculating a maximum value of an equivalent strain and an inclination of an equivalent strain by applying a load to the 3D target model of the target of the resin molding for destruction prediction with a computer; and
a destruction determination step of determining whether or not destruction occurs based on the maximum value of the equivalent strain and the inclination of the equivalent strain calculated by the second calculation step, and the threshold.

6. The destruction prediction method according to claim 5, wherein
the resin molding is a fiber composite resin molding,
the method comprises a fiber orientation calculation step of calculating a fiber orientation of the 3D test piece model, and
the first calculation step calculates the maximum value of the equivalent strain that occurs in the cutout bottom and the inclination of the equivalent strain in the orthogonal direction to the 3D test piece model having information of the fiber orientation calculated by the fiber orientation calculation step.
